# EUROPEAN PATENT SPECIFICATION

(11) **EP 1 995 032 B1**
(45) Date of publication and mention of the grant of the patent: **06.04.2016**
(21) Application number: 07708296.4
(22) Date of filing: 09.02.2007
(51) Int. Cl.: B29C 37/00, B05D 3/12, B05D 7/02, B24C 1/06

(54) **METHOD OF MOLDING PRETREATMENT, BONDED ARTICLE AND PROCESS FOR PRODUCING THE SAME, AND COATED ARTICLE AND PROCESS FOR PRODUCING THE SAME**
VERFAHREN ZUR VORBEHANDLUNG EINES FORMTEILS, GEBONDETER ARTIKEL UND VERFAHREN ZU DESSEN HERSTELLUNG SOWIE ÜBERZOGENER ARTIKEL UND HERSTELLUNGSVERFAHREN DAFÜR
PROCÉDÉ DE PRÉTRAITEMENT D'OBJET MOULÉ, ARTICLE AGGLOMÉRÉ ET PROCÉDÉ DE PRODUCTION DE CE DERNIER, ARTICLE ENDUIT ET PROCÉDÉ DE PRODUCTION DE CE DERNIER

(30) Priority: 15.03.2006 JP 2006070796
(43) Date of publication of application: 26.11.2008
(73) Proprietor: Mitsubishi Heavy Industries, Ltd., Tokyo 108-8215 (JP)
(72) Inventor: OGURI, Kazuyuki, Nagoya-shi Aichi 455-8515 (JP)
(74) Representative: Intès, Didier Gérard André
(86) International application number: PCT/JP2007/052360
(87) International publication number: WO 2007/108248

(56) References cited:
- WO-A1-00/38845
- WO-A1-2005/061913
- DE-A1- 3 909 533
- JP-A- 2 034 325
- JP-A- 05 177 707
- JP-A- 08 034 865
- JP-A- 08 034 866
- JP-A- 2002 097 292
- JP-A- 2002 302 562
- JP-A- 2004 243 497
- JP-B2- H0 738 062
- US-A- 5 024 711

## Description

### Technical Field

The present invention relates to a pretreatment process that facilitates the bonding or coating of a formed article that comprises a resin and interior fibers, and also relates to a bonded article comprising resin and interior fibers and a process for producing the same, and a coated article comprising resin and interior fibers and a process for producing the same.

### Background Art

Composite materials comprising a resin, such as fiber-reinforced plastics, are lightweight and yet very strong, and are therefore widely used as structural materials within aircraft, automobiles and ships and the like. Members formed from these types of composite materials may also be bonded to other members or surface-coated if required (for example, see patent citation 1). In such cases, in order to strengthen the bond, or improve the adhesion with the film formed by the coating process, the surface of the member that is to undergo bonding or coating is pretreated. Examples of widely employed bonding pretreatments or coating pretreatments include processes such as sanding or grit blasting (see patent citations 2 and 3). Furthermore, peel ply processes are also employed as bonding pretreatments. Patent citations 4 and 5 disclose methods according to the preamble of claim 1.

All of the above pretreatments are used to roughen the surface of the member that is to undergo bonding or coating, thereby activating the surface via the newly formed surface. Sanding is a process in which an abrasive medium such as a sandpaper is used to grind the surface of the member. Grit blasting is a process in which particles with sharp edges known as grit are blasted against the surface of the member using compressed air or the like. A peel ply process is a process in which a removable layer (a peel ply) is bonded to the surface of the member, and subsequently peeled off.

Patent Citation 1: Japanese Unexamined Patent Application, Publication No. 2003-62873
Patent Citation 2: German Patent application, Publication No. DE 39 09 533 A1
Patent Citation 3: PCT application, Publication No. WO 00/38845
Patent Citation 4: Japanese published patent application, Publication No. JP 05 177707 A
Patent Citation 5: Japanese published patent application, Publication No. JP 2002 097292 A

JP 2002-302562 discloses a method for surface treatment of rubber vulcanized adhesive surface in resin molding. JP H07 38062 B2 discloses a method for roughening a carbon fiber-reinforced resin. WO 2005/061913 discloses a fluid bearing device in which a high adhesive strength is ensured in fixing another member by adhesion to a resin housing.

### Disclosure of Invention

When a pretreatment is performed using sanding or grit blasting, removal of the resin layer at the composite material surface and subsequent damage to the interior fibers is unavoidable. As a result, the degree of adhesion achieved to the bonded item or coating film during the subsequent bonding or coating process tends to deteriorate, and there is also a possibility of reduction in the strength of the composite material. Furthermore, in the case of a coating pretreatment, another problem arises in that the coated surface tends to be rougher, resulting in an inferior coating surface texture. On the other hand, peel ply processes not only suffer from residues on the peeled surface, but also require extra associated operations and generate large quantities of waste material.

The present invention has been developed in light of the above circumstances, and has an object of providing a process for pretreating a formed article that differs from conventional bonding or coating pretreatment processes such as sanding or grit blasting, enables the surface of a formed article that comprises a resin to be finely roughened without damaging the surface, and particularly in those cases where the formed article is a composite material, enables only the surface of the outermost resin layer to be finely roughened without damaging the fibers. Furthermore, another object of the present invention is to provide a bonded article and a process for producing the same, and a coated article and a process for producing the same, which exhibit excellent adhesion with the bonding target object or the coating film respectively.

In order to achieve the above objects, the process for pretreating a formed article according to claim 1 includes a step of projecting particles with an average particle size of not more than 200 µm onto at least a portion of the surface of a formed article that comprises a resin.

According to this process for pretreating a formed article, the surface of the formed article that comprises a resin and interior fibers can be finely roughened without damaging the surface, and the surface of the outermost resin layer alone can be finely roughened without damaging the fibers.

The process for producing a bonded article according to claim 2 includes a step of applying an adhesive to the surface of the formed article that has been subjected to the above pretreatment. Furthermore, a bonded article of the present invention is an article obtained by bonding a bonding target object to the above surface to which an adhesive has been applied in accordance with the above production process. This bonded article exhibits excellent adhesion between the formed article and the bonding target object.

The process for producing a coated article according to claim 3 includes a step of applying a coating material to the surface of the formed article that has been subjected to the above pretreatment. Furthermore, a coated article according to claim 4 is obtained by forming a cured coating film of the above coating material that is applied to the surface of the formed article in accordance with the above production process.

The process for pretreating a formed article according to the present invention enables the surface of a formed article that comprises a resin to be finely roughened without damaging the surface, and particularly in those cases where the formed article is a composite material, enables only the surface of the outermost resin layer to be finely roughened without damaging the fibers. Furthermore, because an adhesive or coating material undergoes powerful mechanical bonding to the finely roughened surface of a formed article that has been subjected to the above pretreatment, favorable adhesion of the formed article to the bonding target object or coating film can be achieved during subsequent bonding or coating respectively. The process for pretreating a formed article according to the present invention also enables uniform removal of a soiling layer from the surface of a formed article.

### Brief Description of Drawings

[FIG. 1] A schematic illustration of a double cantilever beam method.
[FIG. 2] A schematic illustration of a compressive interlayer shear test.
[FIG. 3] A cross-sectional optical microscope photograph of an untreated CFRP.
[FIG. 4] A cross-sectional optical microscope photograph of a similar CFRP to the test piece used in an example 2 and an example 4.
[FIG. 5] A SEM photograph of a projection material used in the shot blasting of the example 2 and the example 4.
[FIG. 6] A SEM photograph of a CFRP surface that has undergone a shot blast treatment using the projection material shown in FIG. 5.
[FIG. 7] A SEM photograph of a projection material used in the shot blasting of an example 1 and an example 3.
[FIG. 8] A SEM photograph of a CFRP surface that has undergone a shot blast treatment using the projection material shown in FIG. 7.
[FIG. 9] A SEM photograph of a projection material used in the shot blasting of a comparative example 2.
[FIG. 10] A SEM photograph of a CFRP surface that has undergone a shot blast treatment using the projection material shown in FIG. 9.
[FIG. 11] A SEM photograph of a CFRP surface that has undergone a sanding treatment of a comparative example 4 and a comparative example 6.
[FIG. 12] A SEM photograph of an untreated CFRP surface.
[FIG. 13] A diagram showing the results of measuring the surface roughness of a CFRP that has undergone a shot blast treatment using the method of the example 1 and the example 3.
[FIG. 14] A diagram showing the results of measuring the surface roughness of a CFRP that has undergone a shot blast treatment using the method of the example 2 and the example 4.
[FIG. 15] A diagram showing the results of measuring the surface roughness of an untreated CFRP.

### Best Mode for Carrying Out the Invention

Embodiments of the present invention are described below with reference to the drawings.

Examples of materials that can be used favorably as the resin formed article that functions as the treatment target for the pretreatment process of the present invention include composite materials in which a resin acts as the matrix, including fiber-reinforced plastics (FRP) comprising an inorganic fiber such as a glass fiber, carbon fiber, silicon carbide fiber, alumina fiber or boron fiber, or an organic fiber such as a nylon fiber, vinylon fiber or aramid fiber blended into a thermosetting resin such as an unsaturated polyester resin or epoxy resin, and fiber-reinforced thermoplastics (FRTP) comprising any of the above fibers blended into a thermoplastic resin such as a polycarbonate resin, methacrylic resin, polyvinyl chloride resin, polyamide resin or ABS resin.

Examples of the particles (the projection material) used in the pretreatment process of the present invention include hard particles i.e. ceramics and of these, ceramic particles of alumina, silica, silicon carbide and zirconia and the like are particularly preferred. There are no particular restrictions on the shape of the particles used in the present invention, and both substantially spherical particles and particles with sharp edges such as the aforementioned alumina and silicon carbide particles may be used.

The average particle size of the projection material is not more than 200 µm, and is preferably not less than 10 µm but not more than 100 µm. If the average particle size of the projection material exceeds 200 µm, then the excessive kinetic energy of the projection material particles can cause damage to the surface of the formed article, and particularly in those cases where the formed article is the type of composite material described above, can cause damage to the interior fibers, which is very undesirable. Furthermore, if the average particle size of the projection material is smaller than 10 µm, then achieving a stable blast state becomes difficult.

The process for pretreating a formed article according to claim 1 is performed by projecting the above projection particles onto at least a portion of the surface of a formed article that comprises a resin. A treatment in which particles are projected onto the surface of a treatment target object to roughen the surface is also often referred to as "shot blasting". In shot blasting, the blast velocity is prescribed in terms of the blast pressure of the compressed air or the like. In the present invention, the blast pressure during shot blasting is preferably not less than 0.1 MPa and not more than 1 MPa, and is even more preferably not less than 0.3 MPa and not more than 0.6 MPa. If the blast pressure is greater than 1 MPa, then the excessive kinetic energy of the projection material particles can cause damage to the surface of the formed article, and particularly in those cases where the formed article is the type of composite material described above, can cause damage to the interior fibers, which is very undesirable. Furthermore, if the blast pressure is less than 0.1 MPa, then achieving a stable blast state becomes difficult.

In claim 1, the shot blasting coverage is not less than 100% and not more than 1,000%, and is preferably not less than 100% and not more than 500%. If this coverage is less than 100%, then the surface of the formed article cannot be satisfactorily roughened and activated, and the effect of the present invention in improving the adhesion between the treated surface of the formed article and a bonding target object or a coating film is unattainable. Furthermore, if the coverage exceeds 1,000%, then the surface of the formed article may be damaged, and particularly in those cases where the formed article is the type of composite material described above, the interior fibers may be damaged, which is very undesirable.

The arithmetic mean surface roughness Ra of the treated surface of a formed article that has been subjected to pretreatment under the conditions described above is not less than 0.3 µm and not more than 2 µm. If the surface roughness of the treated surface is less than 0.3 µm, then the surface of the formed article cannot be satisfactorily roughened and activated, and the effect of the present invention in improving the adhesion between the treated surface of the formed article and a bonding target object or a coating film is unattainable. Furthermore, if the surface roughness of the treated surface exceeds 2 µm, then in the case of a composite material described above, the interior fibers may be damaged, which is undesirable.

In the process for producing a bonded article according to claim 2, an adhesive is applied to the treated surface of a formed article that has undergone the pretreatment described above.

There are no particular restrictions on the adhesive, provided it is an adhesive typically used for bonding resins, and examples include epoxy-based adhesives, synthetic rubber-based adhesives, cyanoacrylate-based adhesives, acrylic adhesives, and hot-melt adhesives. Furthermore, a base treatment agent (a primer) that exhibits favorable affinity for both the resin of the formed article and the adhesive may be applied to the treated surface of the formed article prior to application of the adhesive.

A bonded,article of claim 1 is formed by applying the adhesive to the treated surface of the formed article, and then bonding a bonding target object to the adhesive-coated surface. In those cases where the bonding target object is also a formed article that comprises a resin, the surface of the bonding target object that is to be bonded is preferably also subjected to a pretreatment of the present invention in the manner descried above.

In the process for producing a coated article of claim 3, a coating material is applied to the treated surface of a formed article that has undergone the pretreatment described above.

There are no particular restrictions on the coating material, provided it is a coating material typically used for coating resins, and examples of materials that can be used include acrylic coating materials, urethane-based coating materials, alkyd-based coating materials, and epoxy-based coating materials. Furthermore, a base treatment agent (a primer) that exhibits favorable affinity for both the resin of the formed article and the coating material may be applied to the treated surface of the formed article prior to application of the coating material.

A coated article of claim 4 is formed by applying the coating material to the treated surface of the formed article, and then curing the coating material to form a coating film.

The process for pretreating a formed article, the bonded article and process for producing the same, and the coated article and process for producing the same according to the present invention are described in more detail below using a series of examples and comparative examples.

### [Adhesion Evaluation Test 1 (Interlayer Fracture Toughness Test)]

### (Comparative Example 1)

Two strip-shaped samples of a carbon fiber-reinforced plastic (CFRP) (dimensions: 350 mm × 25 mm × 4.5 mm) were used as test pieces without any surface pretreatment. An epoxy-based adhesive was applied to one surface of each of the test pieces so as to cover approximately 300 mm from one end of the test piece, and the adhesive-coated surfaces of the two test pieces were then brought together and bonded.

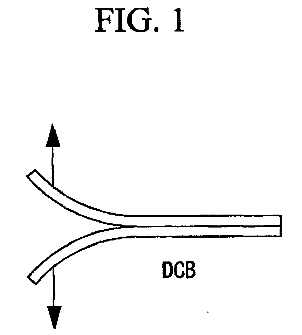

Following curing of the adhesive, an interlayer fracture toughness test was performed using a double cantilever beam (DCB) method. In other words, loads were applied that caused the ends of the test pieces at the opposite end from the bonded portion to move away from each other in directions substantially perpendicular to the bonded surface, and a value was measured for the toughness at the point the cured adhesive layer underwent interlayer separation. FIG. 1 is a schematic illustration of the DCB method.

The same test was performed 5 times. The average value of the measured toughness values is shown in Table 1.

### (Comparative Example 2)

Two CFRP samples similar to those used in the comparative example 1, in which one surface had been pretreated by shot blasting under the conditions described below, were used as test pieces.
Projection material: amorphous alumina particles, #230
Blast pressure: 0.3 MPa
Coverage: 100%

The same epoxy-based adhesive as that used in the comparative example 1 was applied to the shot blasted surface of each of the test pieces so as to cover approximately 300 mm from one end of the test piece, and the adhesive-coated surfaces were then bonded together in the same manner as the comparative example 1. An interlayer fracture toughness test was then performed by the DCB method in the same manner as the comparative example 1, and the toughness value was measured. The same test was performed 5 times. The average value of the measured toughness values is shown in Table 1.

(Example 1)

Two CFRP samples similar to those used in the comparative example 1, in which one surface had been pretreated by shot blasting under the conditions described below, were used as test pieces.

Projection material: ceramic spherical particles (alumina, silica), #400 (average particle size: not more than 50 µm)
Blast pressure: 0.5 MPa
Coverage: 100%

The same epoxy-based adhesive as that used in the comparative example 1 was applied to the shot blasted surface of each of the test pieces so as to cover approximately 300 mm from one end of the test piece, and the adhesive-coated surfaces were then bonded together in the same manner as the comparative example 1. An interlayer fracture toughness test was then performed by the DCB method in the same manner as the comparative example 1, and the toughness value was measured. The same test was performed 5 times. The average value of the measured toughness values is shown in Table 1.

**[Table 1]**

| | Toughness (MPa·cm) |
|---|---|
| Comparative example 1 | 0.035 |
| Comparative example 2 | 0.053 |
| Example 1 | 0.078 |

In the above interlayer fracture toughness tests, higher values for the toughness indicate a higher degree of adhesion between the test pieces. It is evident that the test pieces that had undergone shot blasting in accordance with the present invention (the example 1) exhibited excellent adhesion.

### [Adhesion Evaluation Test 2 (Compressive Interlayer Shear Test)]

### (Comparative Example 3)

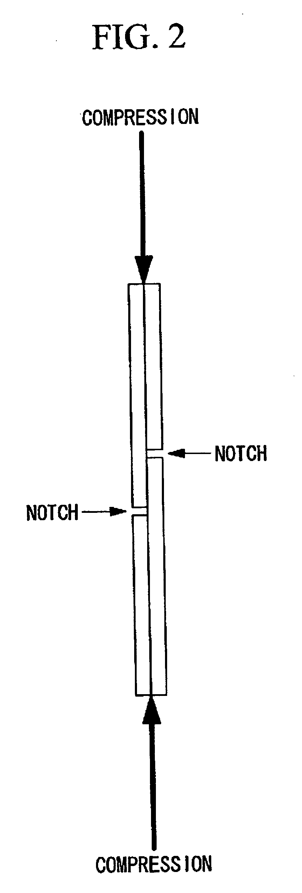

Two strip-shaped samples of a carbon fiber-reinforced plastic (CFRP) (dimensions: 80 mm × 15 mm × 4.5 mm) were used as test pieces without any surface pretreatment. An epoxy-based adhesive was applied to one surface of each of the test pieces, and the adhesive-coated surfaces of the two test pieces were then brought together and bonded. Following curing of the adhesive, notches were inserted from both sides of the bonded structure through to the adhesive surface, as shown in FIG. 2.

A compressive load was then applied as shown in FIG. 2, and the value of the shear strength was measured at the point where interlayer separation occurred within the notched portion. FIG. 2 is a schematic illustration of the compressive interlayer shear test. The same test was performed 5 times. The average value of the measured shear strength values is shown in Table 2.

### (Comparative Example 4)

Two CFRP samples similar to those used in the comparative example 3, in which one surface had been sanded with a #400 silicon carbide sandpaper until the surface no longer shed water, were used as test pieces.

The same epoxy-based adhesive as that used in the comparative example 3 was applied to the test pieces, and the adhesive-coated surfaces were then bonded together in the same manner as the comparative example 3. A compressive interlayer shear test was then performed in the same manner as the comparative example 3, and the shear strength value was measured. The obtained shear strength value is shown in Table 2.

### (Example 2)

Two CFRP samples similar to those used in the comparative example 3, in which one surface had been pretreated by shot blasting under the conditions described below, were used as test pieces.
Projection material: amorphous silicon carbide particles, #400
Blast pressure: 0.5 MPa
Coverage: 100%

The same epoxy-based adhesive as that used in the comparative example 3 was applied to the test pieces, and the adhesive-coated surfaces were then bonded together in the same manner as the comparative example 3. A compressive interlayer shear test was then performed in the same manner as the comparative example 3, and the shear strength value was measured. The obtained shear strength value is shown in Table 2.

**[Table 2]**

| | Strength (MPa) |
|---|---|
| Comparative example 3 | 25.3 |
| Comparative example 4 | 35.0 |
| Example 2 | 41.0 |

In the above compressive interlayer shear tests, as was the case above, it is evident that the test pieces that had undergone shot blasting in accordance with the present invention (the example 2) exhibited excellent adhesion.

### [Coating Film Adhesion Evaluation Test]

### (Comparative Example 5)

A sample of a carbon fiber-reinforced plastic (CFRP) (dimensions: 200 mm × 100 mm × 4.5 mm) was used as a test piece without any surface pretreatment. A primer for coating composite materials was applied to one surface of the test piece by spraying, and the coating film adhesion was evaluated using a cross-cut method, by bonding an adhesive tape to the coated surface, and then peeling the tape off the surface and measuring the percentage of the coating film surface area that was removed with the adhesive tape.

The result of this coating film adhesion evaluation test is shown in Table 3.

### (Comparative Example 6)

A CFRP sample similar to that used in the comparative example 5, in which one surface had been sanded with a #400 silicon carbide sandpaper until the surface no longer shed water, was used as a test piece.

The same primer as that used in the comparative example 5 was applied to the sanded surface of the test piece by spraying, and a coating film adhesion test was performed in the same manner as the comparative example 5.

The result of the coating film adhesion evaluation test is shown in Table 3.

### (Example 3)

A CFRP sample similar to that used in the comparative example 5, in which one surface had been pretreated by shot blasting under the conditions described below, was used as a test piece.

Projection material: ceramic spherical particles (alumina, silica), #400 (average particle size: not more than 50 µm)
Blast pressure: 0.5 MPa
Coverage: 100%

The same primer as that used in the comparative example 5 was applied to the shot blasted surface of the test piece by spraying, and a coating film adhesion test was performed in the same manner as the comparative example 5.

The result of the coating film adhesion evaluation test is shown in Table 3.

### (Example 4)

A CFRP sample similar to that used in the comparative example 5, in which one surface had been pretreated by shot blasting under the conditions described below, was used as a test piece.
Projection material: amorphous silicon carbide particles, #400
Blast pressure: 0.5 MPa
Coverage: 100%

The same primer as that used in the comparative example 5 was applied to the shot blasted surface of the test piece by spraying, and a coating film adhesion test was performed in the same manner as the comparative example 5.

The result of the coating film adhesion evaluation test is shown in Table 3.

**[Table 3]**

| | Surface Area of Coating Film Removed (%) |
|---|---|
| Comparative example 5 | 45 |
| Comparative example 6 | 8 |
| Example 3 | 0 |
| Example 4 | 0 |

In the above coating film adhesion evaluation tests, it is evident that the test pieces that had undergone shot blasting in accordance with the present invention (the examples 3 and 4) exhibited excellent adhesion.

### [Results of Cross-sectional Optical Microscope Inspection]

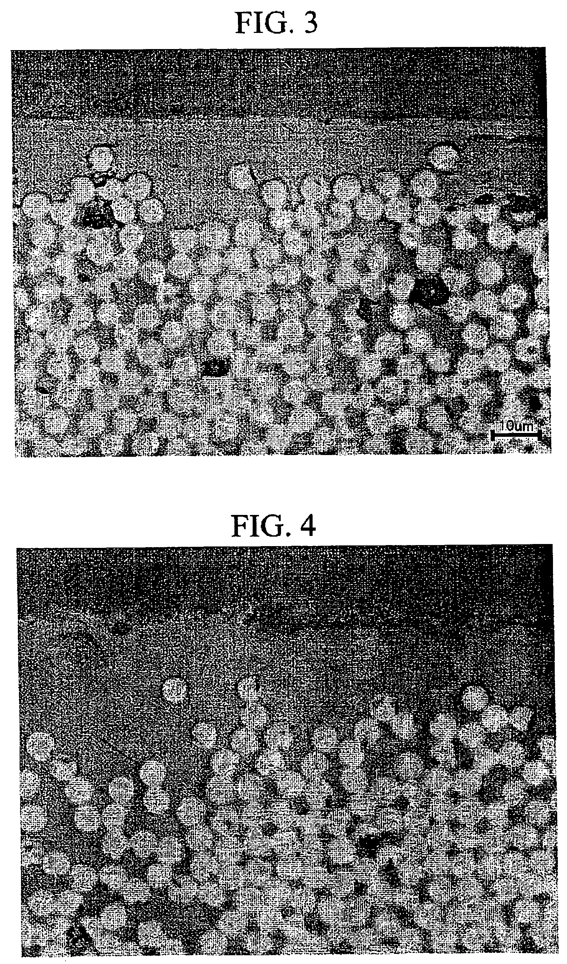

Cross-sectional optical microscope photographs of an untreated CFRP similar to the test pieces (prior to bonding) used in the comparative example 1, the comparative example 3 and the comparative example 5, and a CFRP similar to the pretreated test pieces (following shot blasting but prior to bonding) used in the example 2 and the example 4 are shown in FIG. 3 and FIG. 4 respectively.

From FIG. 3 and FIG. 4 it is evident that following shot blasting in accordance with the present invention, the surface of the CFRP has been roughened, but it is also evident that only the surface of the outermost resin layer has been roughened, with no damage to the fibers.

### [Results of Surface SEM Inspection]

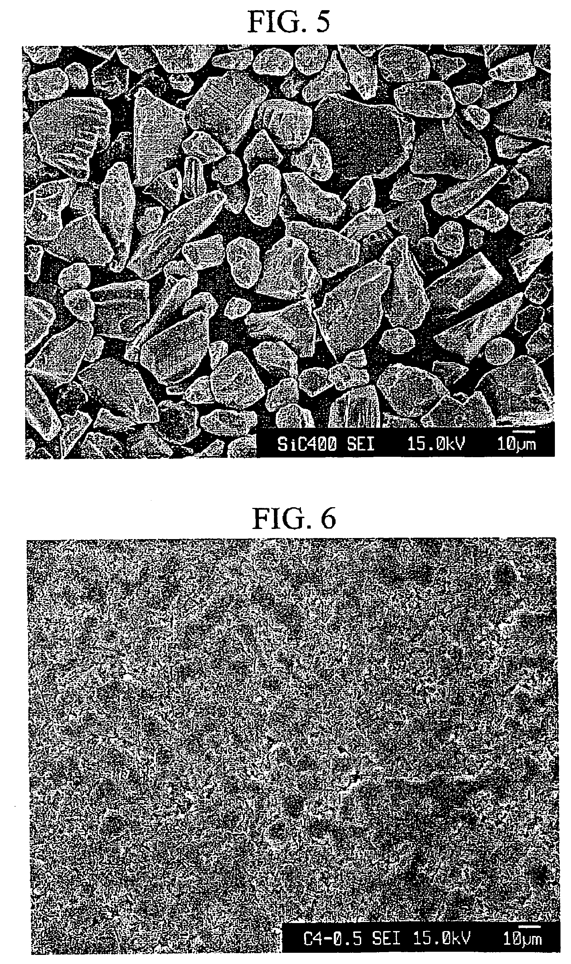

Scanning electron microscope (SEM) photographs of the amorphous silicon carbide particles #400 used in the shot blasting of the example 2 and the example 4, and the CFRP surface following a shot blasting treatment using the particles are shown in FIG. 5 and FIG. 6 respectively. From FIG. 6 it is evident that although the CFRP surface has been roughened, there is no damage to the fibers.

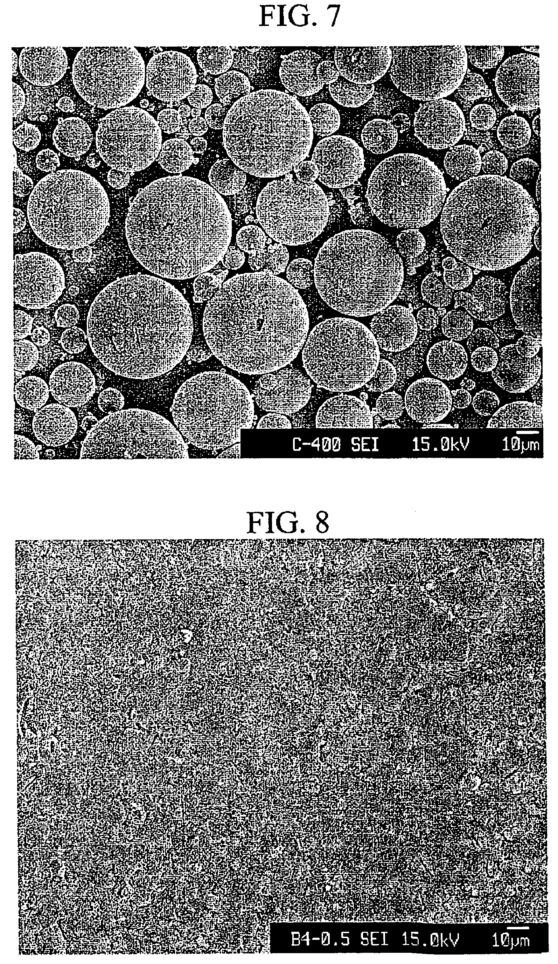

SEM photographs of the ceramic spherical particles #400 used in the shot blasting of the example 1 and the example 3, and the CFRP surface following a shot blasting treatment using the particles are shown in FIG. 7 and FIG. 8 respectively. From FIG. 8 it is evident that although the CFRP surface has been roughened, there is no damage to the fibers.

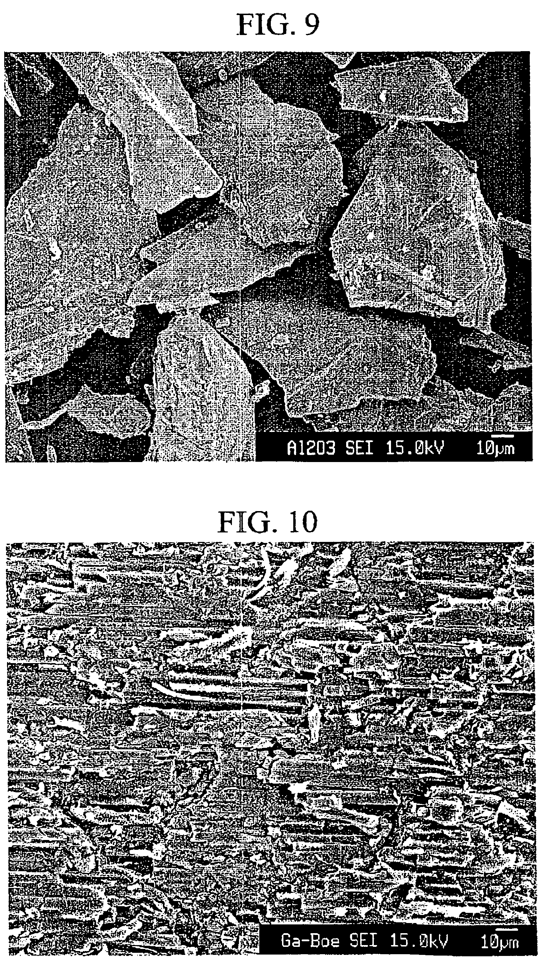

SEM photographs of the amorphous alumina particles #230 used in the shot blasting of the comparative example 2, and the CFRP surface following a shot blasting treatment using the particles are shown in FIG. 9 and FIG. 10 respectively. From FIG. 10 it is evident that the fibers from the interior of the CFRP have been exposed and damaged.

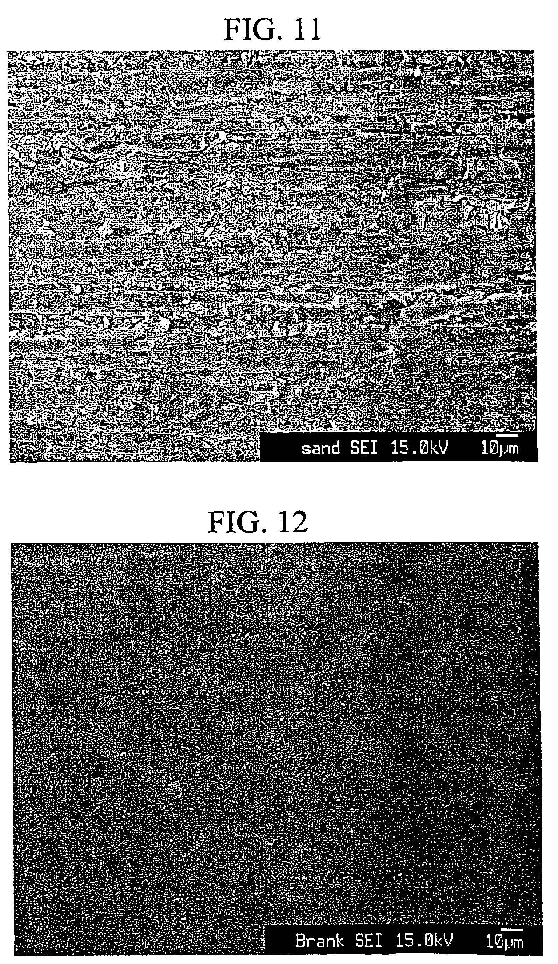

A SEM photograph of a CFRP surface following a sanding treatment using a #400 silicon carbide sandpaper in accordance with the method of the comparative example 4 and the comparative example 6 is shown in FIG. 11. From FIG. 11 it is evident that the fibers from the interior of the CFRP have been exposed and damaged.

From FIG. 5 through FIG. 11 it is clear that the state of a CFRP surface that has undergone shot blasting treatment varies in accordance with the size and shape of the particles used.

FIG. 12 shows a SEM photograph of a CFRP surface that has undergone no surface treatment.

### [Results of Measuring Surface Roughness]

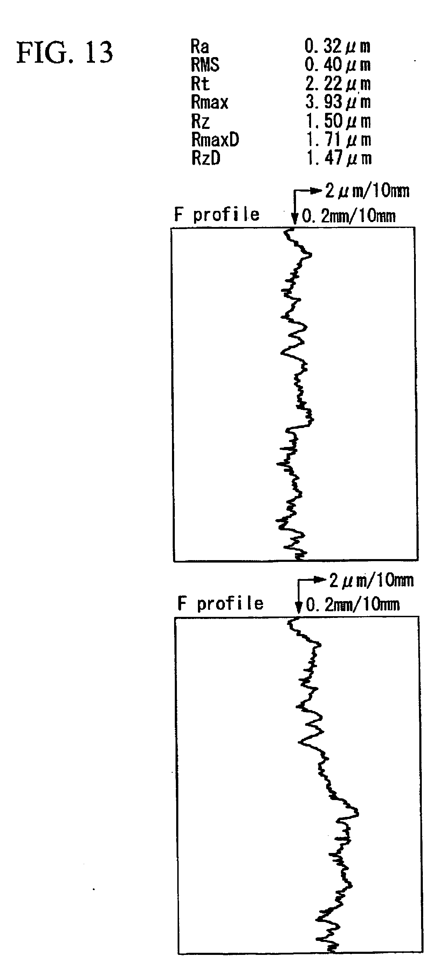

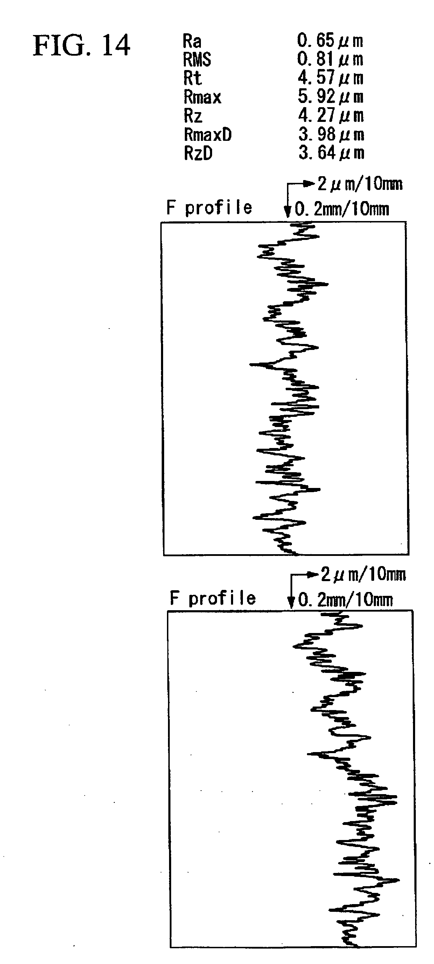

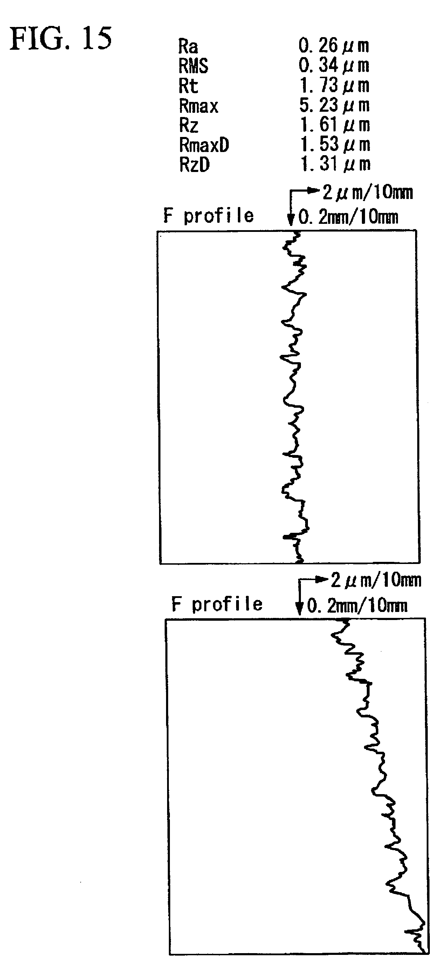

The results of measuring the surface roughness of a CFRP that has been subjected to a shot blasting treatment using ceramic spherical particles #400 in accordance with the method of the example 1 and the example 3 are shown in FIG. 13. Furthermore, the results of measuring the surface roughness of a CFRP that has been subjected to a shot blasting treatment using amorphous silicon carbide particles #400 in accordance with the method of the example 2 and the example 4 are shown in FIG. 14. Moreover, the results of measuring the surface roughness of an untreated CFRP are shown in FIG. 15. Although the sample that has been subjected to a shot blasting treatment using the amorphous silicon carbide particles #400 exhibits a greater level of surface roughness, the surface roughness is in the order of several µm for both of the shot blasting treatments, indicating that roughening of the surface of only the outermost resin layer is possible.

## Claims

1. A process for pretreating a formed article, **characterized in that** it comprises a step of projecting particles that are made of ceramics, with an average particle size of not more than 200 µm, onto at least a portion of a surface of a formed article that comprises a resin and interior fibers, so that an arithmetic mean surface roughness Ra of the surface of the formed article after the step of projecting the particles is not less than 0.3 µm and not more than 2 µm so as to pretreat without causing damage to the interior fibers, in the step of projecting particles, a blast pressure is not less than 0.1 MPa and not more than 1 MPa, and a coverage formed by the projected particles is not less than 100% and not more than 1000%.

2. A process for producing a bonded article, comprising a step of applying an adhesive to the surface of the formed article that has been pretreated using the process according to claim 1.

3. A process for producing a coated article, comprising a step of applying a coating material to the surface of the formed article that has been pretreated using the process according to claim 1.

4. A bonded article, comprising a bonding target object bonded to the surface of a formed article comprising a resin and interior fibers, to which the adhesive has been applied using the process according to claim 2, **characterized in that** an arithmetic mean surface roughness Ra of said surface of the formed article is not less than 0.3 µm and not more than 2 µm.

5. A coated article, produced by forming a cured coating film of the coating material applied to the surface of the formed article comprising a resin and interior fibers, using the process according to claim 3, **characterized in that** an arithmetic mean surface roughness Ra of said surface of the formed article is not less than 0.3 µm and not more than 2 µm.

## Patentansprüche

1. Verfahren zur Vorbehandlung eines Formteils, **dadurch gekennzeichnet, dass** es einen Schritt zum Projizieren von Partikeln, die aus Keramik bestehen, mit einer durchschnittlichen Partikelgröße von nicht mehr als 200 11m, auf zumindest einen Abschnitt einer Oberfläche eines Formteils umfasst, das ein Harz und Innenfasern umfasst, so dass eine arithmetische mittlere Oberflächenrauheit Ra der Oberfläche des Formteils nach dem Schritt des Projizierens von Partikeln nicht weniger als 0,3 µm und nicht mehr als 2 µm beträgt, so dass für eine Vorbehandlung ohne eine Beschädigung an den Innenfasern in dem Schritt des Projizierens von Partikeln zu verursachen, ein Gebläsedruck nicht weniger als 0,1 MPa und nicht mehr als 1 MPa ist, und ein Überzug, der durch die projizierten Partikel gebildet wird, nicht weniger als 100 % und nicht mehr als 1000 % ist.

2. Verfahren zum Herstellen eines gebondeten Artikels, umfassend einen Schritt zum Auftragen eines Klebstoffs auf die Oberfläche des Formteils, der unter Verwendung des Verfahrens nach Anspruch 1 vorbehandelt wurde.

3. Verfahren zum Herstellen eines überzogenen Artikels, umfassend einen Schritt zum Auftragen eines Überzugsmaterials auf die Oberfläche des Formteils, der unter Verwendung des Verfahrens nach Anspruch 1 vorbehandelt wurde.

4. Gebondeter Artikel, umfassend ein Bonding-Zielobjekt, das an die Oberfläche eines Formteils gebondet ist, das ein Harz und Innenfasern umfasst, auf welches ein Klebstoff unter Verwendung des Verfahrens nach Anspruch 2 aufgetragen wurde, **dadurch gekennzeichnet, dass** eine arithmetische mittlere Oberflächenrauheit Ra der Oberfläche des Formteils nicht weniger als 0,3 µm und nicht mehr als 2 µm beträgt.

5. Überzogener Artikel, der durch Bilden eines gehärteten Überzugfilms des Überzugmaterials, das auf die Oberfläche des Formteils aufgetragen wird, das ein Harz und Innenfasern umfasst, unter Verwendung des Verfahrens nach Anspruch 3 gebildet wird, **dadurch gekennzeichnet, dass** eine arithmetische mittlere Oberflächenrauheit Ra der Oberfläche des Formteils nicht weniger als 0,3 µm und nicht mehr als 2 µm beträgt.

## Revendications

1. Procédé de prétraitement d'un article façonné, **caractérisé en ce qu'**il comprend une étape de projection de particules qui sont constituées de céramique, avec une taille moyenne de particule d'au plus 200 µm, sur au moins une partie d'une surface d'un article façonné qui comprend une résine et des fibres intérieures, de sorte qu'une rugosité de surface moyenne arithmétique Ra de la surface de l'article façonné après l'étape de projection des particules n'est pas inférieure à 0,3 µm et n'est pas supérieure à 2 µm afin de prétraiter sans occasionner de détérioration des fibres intérieures, dans l'étape de projection de particules, une pression de soufflage n'est pas inférieure à 0,1 MPa et n'est pas supérieure à 1 MPa, et une couverture formée par les particules projetées n'est pas inférieure à 100 % et n'est pas supérieure à 1 000 %.

2. Procédé de production d'un article lié, comprenant une étape d'application d'un adhésif à la surface de l'article façonné qui a été prétraité en utilisant le procédé selon la revendication 1.

3. Procédé de production d'un article revêtu, comprenant une étape d'application d'un matériau de revêtement sur la surface de l'article façonné qui a été prétraité en utilisant le procédé selon la revendication 1.

4. Article lié, comprenant un objet cible de liaison lié à la surface d'un article façonné comprenant une résine et des fibres intérieures, auquel l'adhésif a été appliqué en utilisant le procédé selon la revendication 2, **caractérisé en ce qu'**une rugosité moyenne de surface arithmétique Ra de ladite surface de l'article façonné n'est pas inférieure à 0,3 µm et n'est pas supérieure à 2 µm.

5. Article revêtu, produit en formant un film de revêtement durci du matériau de revêtement appliqué sur la surface de l'article façonné comprenant une résine et des fibres intérieures, en utilisant le procédé selon la revendication 3, **caractérisé en ce qu'**une rugosité de surface moyenne arithmétique Ra de ladite surface de l'article façonné n'est pas inférieure à 0,3 µm et n'est pas supérieure à 2 µm.
